# EUROPEAN PATENT SPECIFICATION

(11) **EP 3 277 863 B1**
(45) Date of publication and mention of the grant of the patent: **19.06.2019**
(21) Application number: 16714357.7
(22) Date of filing: 31.03.2016
(51) Int. Cl.: C25B 11/04, C01G 53/00

(54) **METHOD FOR MANUFACTURING OF A POROUS ELECTRODE MATERIAL**
VERFAHREN ZUR HERSTELLUNG EINES PORÖSEN ELEKTRODENMATERIALS
PROCÉDÉ DE FABRICATION D'UN MATÉRIAU POREUX POUR ÉLECTRODE

(30) Priority: 31.03.2015 EP 15162094
(43) Date of publication of application: 07.02.2018
(73) Proprietor: INL - International Iberian Nanotechnology Laboratory, 4715-330 Braga (PT)
(72) Inventor: WANG, Xiaoguang, 4715-330 Braga (PT); KOLEN'KO, Yury V, 4715-330 Braga (PT); BAO, Xiaoqing, 4715-330 Braga (PT); LI, Wei, 4715-330 Braga (PT); LIU, Lifeng, 4715-330 Braga (PT)
(74) Representative: AWA Sweden AB
(86) International application number: PCT/EP2016/057010
(87) International publication number: WO 2016/156460

(56) References cited:
- WO-A1-98/07899
- GB-A- 1 418 943
- GB-A- 2 045 279
- US-A- 4 184 941
- MA JIANJUN ET AL: "The preparation of Ni5P4/Ni composite via a chemical corrosion method and its application in lithium ion batteries", MATERIALS LETTERS, vol. 133, 28 June 2014 (2014-06-28), pages 94-96, XP029043099, ISSN: 0167-577X, DOI: 10.1016/J.MATLET.2014.06.144
- JINGQI TIAN ET AL: "Self-Supported Cu 3 P Nanowire Arrays as an Integrated High-Performance Three-Dimensional Cathode for Generating Hydrogen from Water", ANGEWANDTE CHEMIE INTERNATIONAL EDITION, vol. 53, no. 36, 1 September 2014 (2014-09-01), pages 9577-9581, XP055276929, DE ISSN: 1433-7851, DOI: 10.1002/anie.201403842
- DATABASE WPI Week 201555 Thomson Scientific, London, GB; AN 2015-44001N XP002758327, -& CN 104 630 822 A (UNIV TAIYUAN TECHNOLOGY) 20 May 2015 (2015-05-20)

## Description

### Field of invention

The present invention relates to a method for manufacturing of a porous electrode material, and to a porous electrode material obtainable from the method.

### Background

Hydrogen (H₂) has been proposed as a future energy carrier to replace conventional fossil fuels for both stationary and portable power generation. Presently, the global production of H₂ primarily originates from steam reforming processes, which not only consume non-renewable fossil fuels but also emit a large amount of carbon dioxide. In contrast, water electrolysis represents a much cleaner, more sustainable and environmentally friendly approach to producing H₂ and should be developed vigorously. There is, however, a need for highly efficient and low-cost catalyst and materials for catalysis for hydrogen production and the hydrogen evolution reaction, HER. There is further a need for long term durability for such catalysts and efficient methods for their production.

### Summary of invention

An object of the present invention is to provide an efficient method for manufacturing of a porous electrode material.

An object of the present invention is to provide an efficient method for manufacturing of a porous electrode material, without disadvantages of prior art.

Another object of the present invention is to provide manufacturing of an efficient porous electrode material for efficient hydrogen production from water.

Yet another object of the present invention is to provide for a material or a cathode for efficient electrocatalytic hydrogen generation.

According to a first aspect, there is provided a method for manufacturing of a porous electrode material, wherein the porous electrode material comprises transition metal phosphide on a porous structure comprising transition metal. The method comprises contacting elemental phosphorous and a porous structure comprising transition metal, and heating, in an inert atmosphere, the contacted elemental phosphorus and the porous structure comprising transition metal to a temperature in the temperature range of 300 to 1100°C, thereby reacting at least a part of the phosphorus and at least a part of the transition metal under formation of transition metal phosphide on the surface of the porous structure, thereby forming the porous electrode material.

The contacting elemental phosphorus and a porous structure comprising transition metal provides for efficient reaction between elemental phosphorus and the transition metal.

The porous structure comprising transition metal is efficient for providing a porous electrode for efficient hydrogen production. Further, the porous structure provides a large surface to volume ratio.

The temperature in the temperature range of 300 to 1100°C provides efficient reaction and electrode material.

The temperature may be set to control the surface structure of the transition metal phosphide.

The heating may be heating with a temperature gradient.

The porous structure may essentially consist of transition metal.

The porous electrode material may comprise transition metal and transition metal phosphide.

The provided electrode material is a self-supported material, capable of providing self-supported electrodes.

The electrode may be a cathode. The cathode may be used for electrocatalytic hydrogen, or H₂, generation.

The contacting may be by depositing of a powder or a paste, of solid elemental phosphorus, on the surface of the transition metal. Thus efficient contact between elemental phosphorus and the transition metal is realised.

A "solid state method" as disclosed herein refers to such a method wherein the contacting is by contacting by depositing of solid elemental phosphorus, for example as a powder or a paste, on the surface of the transition metal.

The inert atmosphere, for a solid state method, may be provided by an inert gas or by vacuum. The inert gas may be, for example Ar or N₂.

The method may further comprise evaporating solid elemental phosphorus by heating, thereby forming a phosphorus vapour, wherein the contacting is by contacting the phosphorus vapour and the transition metal.

Thus, efficient contacting and reaction between elemental phosphorous and the transition metal is realised.

A "gas transport method" as used according to the invention refers to such a method comprising evaporating solid elemental phosphorus by heating.

The evaporating is conducted by providing elemental phosphorus separated from the porous structure comprising transition metal.

For the gas transport method, the contacting may be by flowing the phosphorus vapour by a stream of inert gas such that the phosphorus vapour is brought in contact with the transition metal. Thereby efficient evaporation and efficient contacting is realised.

The evaporating, where relevant, may be by heating to a temperature in the range of 300 to 800°C. The evaporating may be by heating to a temperature in the range of 350 to 550°C, such as around 400°C. Thereby efficient evaporation is provided.

The difference between the temperature of the heating and the temperature of the evaporating, where relevant, may be 0-300°C, 50-200°C, or 90-110°C, for example 100°C.

The inert atmosphere may be provided by an inert gas, preferably Ar or N₂.

With respect to both the solid state method and the gas transport method:
The transition metal may be nickel, and the transition metal phosphide may be selected from the group consisting of Ni₃P, Ni₇P₃, Ni₅P₂, Ni_{2.55}P, NiP₃, NiP, Ni₈P₃, Ni₁₂P₅, Ni₅P₄, NiP₂, Ni₂P, and Ni₅P₄, or combinations thereof.

The transition metal may be cobalt, and the transition metal phosphide may be selected from the group consisting of Co_{1.94}P, Co_{1.95}P, Co₂P, CoP, CoP₂, CoP₃, CoP₄ or combinations thereof.

The transition metal may be copper, and the transition metal phosphide may be selected from the group consisting of Cu₃P, CuP₂, Cu₂P₇, Cu_{0.97}P_{0.03}, Cu_{2.82}P, Cu_{0.985}P_{0.015}, Cu_{2.82}P, Cu_{2.872}P, CuP₁₀ or combinations thereof.

The transition metal may be iron, and the transition metal phosphide may be selected from the group consisting of Fe₄P, Fe₃P, Fe₂P, FeP, FeP₂, FeP₄, Fe₈₃P₁₇, Fe_{1.91}P, Fe_{1.984}P, Fe_{0.96}P_{0.04} or combinations thereof.

The transition metal may alternatively be selected from the group of transition metals of the periodic table.

The heating may be heating to a temperature in the temperature range of 400 to 800°C.

The heating may take place during 0.5 to 24 hours. This temperature range allows for efficient formation of transition metal phosphide on the surface of the porous structure, thereby forming the porous electrode material.

The time duration of the heating may for a given temperature be used to vary the ratio of transition metal to transition metal phosphide in the porous electrode material. A longer duration of heating at a given temperature may reduce the amount of transition metal and increases the amount of transition metal phosphide in the porous electrode material. A sufficiently long duration time may lead to a porous electrode material consisting of transition metal phosphide.

The porous structure comprising transition metal, may be provided in the form of a foam having a maximum average pore size of 1 mm or below, such as 800 micrometers or below, 500 micrometers or below, or 300 micrometers or below. Such a porous structure provides for an efficient electrode, for example for hydrogen production.

The metal foam may have a porosity in the range of 25 and 99%, for example 50 to 98%. Such a porous structure provides for an efficient electrode, for example for hydrogen production.

According to a second aspect there is provided a porous electrode material obtainable from the method according to the first aspect.

The porous electrode material may comprise a transition metal phosphide in the form of micro or nanostructures on the surface of the porous structure. The micro/nanostructure may be in the form of nanosheets or nanorods.

Further features of, and advantages with, the present invention will become apparent when studying the appended claims and the following description. The skilled person will realise that different features of the present invention may be combined to create embodiments other than those described in the following, without departing from the scope of the present invention. Features of one aspect may be relevant to anyone of the other aspects, references to these features are hereby made.

### Brief description of drawings

Figure 1 is schematic illustration of a method according to an embodiment.
Figure 2 is schematic illustration of a method according to an embodiment.
Figure 3 discloses a SEM image of a Ni foam illustrating its porous structure.
Figure 4 discloses a SEM image of nickel phosphide on the surface of a Ni foam.
Figure 5 discloses a high magnification SEM image of nickel phosphide on the surface of a Ni foam.
Figure 6 shows an X-ray diffraction (XRD) pattern of a nickel phosphide electrode.
Figure 7 shows the polarization curve for a nickel phosphide electrode.
Figure 8 illustrates durability data for a nickel phosphide electrode.
Figure 9 discloses low- and high-magnification SEM images of cobalt phosphide on the surface of a cobalt foam.
Figure 10 shows an energy dispersive X-ray (EDX) spectrum of the cobalt foam after phosphorization.
Figure 11 reveals an X-ray diffraction (XRD) pattern of a cobalt phosphide electrode.
Figure 12 shows the polarization curve for a cobalt phosphide electrode.
Figure 13 discloses low- and high-magnification SEM images of a copper phosphide on the surface of a copper foam.
Figure 14 shows an energy dispersive X-ray (EDX) spectrum of the copper foam after phosphorization.
Figure 15 shows the polarization curve for a copper phosphide electrode.

### Detailed description

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The method for manufacturing of a porous electrode material, comprising contacting elemental phosphorous and a porous structure comprising transition metal, and reacting phosphorous and transition metal under formation of transition metal phosphide on the surface of the porous structure, as described herein is an efficient method resulting in an efficient porous electrode material which can be used for efficient production of hydrogen. It will be shown that efficient electrode material for hydrogen production is produced. For example an electrode material manufactured from nickel and phosphorus is efficient and may be produced from low cost raw material. Further, long term durability is provided with the materials disclosed. The use of the porous structure comprising transition metal, such as for example nickel, with the methods of embodiments results in durable and self-supporting electrode materials. Further, the methods described herein are characterised by, for example, in that they comprises few steps and a few compounds.

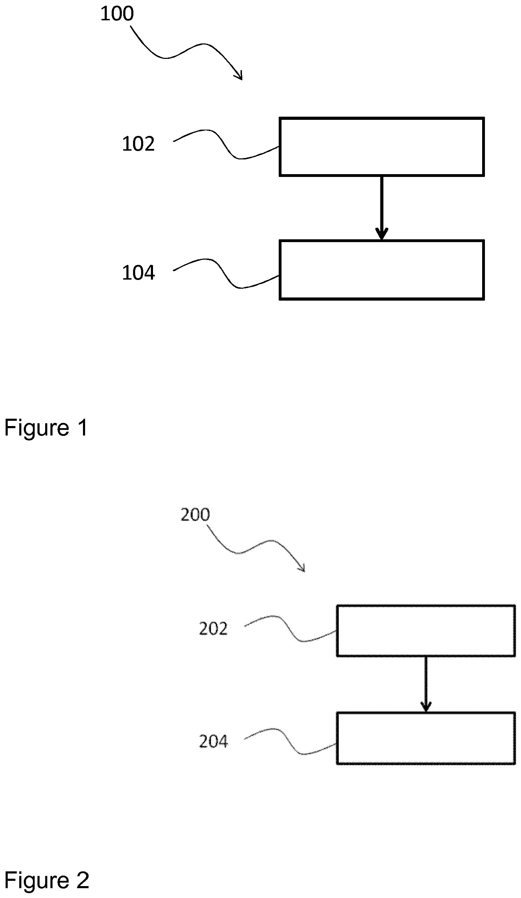

With reference to figure 1, an embodiment of the method is discussed. Figure 1 schematically illustrates a method 100 for manufacturing of a porous electrode material. The method 100 comprises contacting 102 elemental phosphorous and a porous structure comprising transition metal and heating 104, in an inert atmosphere, the contacted elemental phosphorous and the porous structure comprising transition metal to a temperature in the temperature range of 300 to 1100°C, thereby reacting at least a part of the phosphorous and at least a part of the transition metal under formation of transition metal phosphide on the surface of the porous structure, thereby forming the porous electrode material. It is realised that the electrode material may be used for manufacturing of electrodes, such as cathodes, or the material may be used directly as electrodes.

A simplified method for manufacturing of a porous electrode is thereby provided. Moreover, the direct phosphorization of the transition metal offers a simple and straightforward approach to manufacturing self-supported low-cost electrodes that may be used as HER electrodes. The method is moreover scalable and thereby cost-effective.

In the methods for manufacturing of a porous electrode material, metallic nickel and elemental phosphorous may be reacted in a solid state method or a gas-transport method. The nickel phosphide will form through a direct redox reaction between Ni metal and solid or gaseous P species, for instance, 12Ni + 5P = Ni₁₂P₅, 2Ni + P = Ni₂P, 5Ni + 4P = Ni₅P₄. The driving force of the reaction is the transfer of electrons from the electropositive Ni metal to the electronegative P.

### Solid state method (not according to the invention)

With reference to figure 2, a method for manufacturing of a porous electrode material is discussed. The method 200 takes place inside a heatable reactor. The contacting 202 is by depositing of a powder of solid elemental phosphorous on a surface of a porous structure consisting of nickel. It is realised that instead of a powder, a paste of elemental phosphorus could have been deposited, and that instead of nickel, another suitable transition metal could have been used. The reactor is filled with inert gas, and heated 204 to 400°C to 600°C, whereby the phosphorus is reacted with a part of the nickel on the surface of the porous structure, under formation of nickel phosphide. The nickel phosphide is formed on the surface of the porous structure. The resulting porous electrode material thus has nickel phosphide on the surface of a porous transition metal structure. The thus obtained porous material is efficient for use as an electrode in hydrogen production.

The reacting of the transition metal with the elemental phosphorus in the solid-state chemistry fashion may be referred to as a "solid-state method" as the transition metal and the elemental phosphorus are both in their solid states as they are brought in contact with each other.

According to one embodiment the inert atmosphere is provided by an inert gas or by vacuum. Chemical reactions other than the formation of transition metal phosphide are thereby mitigated. The inert gas may be Ar or N₂.

In the following the method of manufacturing a porous electrode material comprising NiₓP_{y} on a porous structure comprising Ni using the solid-state method will be described.

The elemental phosphorus (P⁰) for use in the solid state method may be in various forms as long as it comprises elemental phosphorus (i.e., P⁰). Preferably, the elemental phosphorus is amorphous red P. Hence a cost efficient and nontoxic elemental phosphorus is provided.

The nickel in the porous structure may be of different forms as long as it comprises metallic nickel (i.e., Ni⁰), and is capable of reacting with P⁰ to form nickel phosphides. The Ni compound may be, for example, commercially available porous nickel foam providing a large surface area for improved formation of nickel phosphide and improved catalytic properties.

The Ni foam may have an average porosity ranging between 50 % and 98 %. In a preferred embodiment, the average porosity of the Ni foam ranges between 70 % and 98 %; even more preferably, the average porosity of Ni foam ranges between 85 % and 98 %.

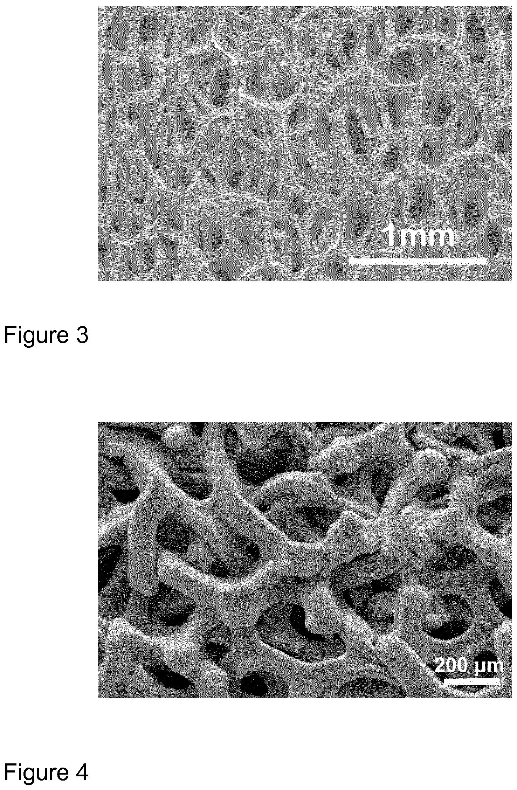

The maximum average pore size of the Ni foam may be 800 µm. In a preferred embodiment, the maximum average pore size of the Ni foam is 500 µm; even more preferably, the maximum average pore size of the nickel foam is 300 µm. As an example, figure 3 discloses a scanning electrode image of a Ni foam illustrating its porous structure.

The solid-state method is preferably carried out in a closed system under inert atmosphere of argon, nitrogen or vacuum.

The solid-state method may be carried out under a low stream of argon flow. The temperature of solid-state reaction may for instance be in the range of 300 to 1100 °C, more preferably 400 to 600 °C; most preferably, it is about 500 °C.

Looking at binary alloy nickel-phosphorus phase diagram, it may be concluded which temperature is necessary to achieve the thermodynamic equilibrium of the specific nickel phosphide compound so that the thermodynamically most stable modification is manufactured.

### Example 1 with Solid state method (not according to the invention)

In the phosphorization methods a specific self-supported NiP/Ni composite or Ni-P electrodes was obtained by varying the Ni:P molar ratio, tempering temperature, and tempering time as will be describe in the following.

Ethanol-based wet paste containing of 0.1 g of P red was homogeneously added on top surface of about 0.6 g of Ni foam (corresponding to a Ni : P molar ratio of about 3 : 1) and left to dry. The obtained material was tempered at 400 °C for 6 h and then at 600 °C for 2 h in tube furnace with argon flow of 100 mL min⁻¹. Through the solid-state method a Ni-P/Ni composite electrode was obtained.

### Example 2 with Solid state method (not according to the invention)

A Ni-P electrode was manufactured with the solid-state method as described below.

For the preparation of the electrode, the procedure of Example 1 was repeated with the exception of that 0.3 g of P red (corresponding to a Ni : P molar ratio of about 1 : 1) was used.

It should be noted that the molar ratio of Ni : P may be used to vary the ratio of transition metal to transition metal phosphide in the porous electrode material. Hence the porous electrode material may comprise transition metal.

### Gas transport method

In the following manufacturing of a porous electrode material using the gas transport method will be described. For the experiments disclosed the porous electrode material is manufactured with phosphor red and the porous structure comprising transition metal is provided by using a Ni, a Co or a Cu foam. The person skilled in the art realizes that other transition metals may also be used as discussed below.

In the first set of experiments using a Ni foam the gas transport method was carried out according to the following. Ni foam was purchased from Heze Jiaotong Group (110 ppi, 0.3 mm thick), and red phosphorus (P) was obtained from Sigma-Aldrich (≥97.0 %). Prior to phosphorization, the Ni foam was cleaned by ultrasonication in 6 M HCl for 5 min to remove the surface oxide layer, washed sequentially by water and acetone, and finally dried at 50 °C for 10 min. Subsequently, a piece of Ni foam with an area of ca. 2.5 x 2.5 cm² was loaded into a ceramic boat, with ca. 1 g of P red placed 2 cm away from the Ni foam in the upstream side. Afterwards, the boat was put into a tube furnace (Carbolite). The furnace was purged with nitrogen (N₂, 99.999%) at a flow rate of 800 SCCM for 30 min, heated to 500 °C at 5 °C min⁻¹, and kept at this temperature for 6 h. The furnace was then cooled down to 250°C at 5 °C min⁻¹ and maintained at this temperature for another 6 h. Finally, the furnace was naturally cooled down to room temperature. The N₂ flow was maintained throughout the whole tempering process. The resultant foam was then washed sequentially with deionized water, ethanol and acetone, then dried in a N₂ flow.

### Example 3 - Evaluation of integrated Ni-P electrode with the gas-transport method

With reference to figures 3 to 8 nickel phosphide electrodes manufactured with the gas-transport method have been evaluated and are discussed. Electrochemical measurements were conducted at room temperature (-25 °C) in a typical three-electrode cell using the as-synthesized self-supported nickel phosphide porous structure, or foam, as the working electrode, a graphite plate as the counter electrode and a saturated calomel electrode (SCE) as the reference. The electrolyte was 0.5 M H₂SO₄ solution (pH = 0.28). For comparison, the electrocatalytic performance of a polished flat Pt sheet and a bare Ni foam was also evaluated. Before each electrochemical measurement, the electrolyte was deaerated by N₂ bubbling for 30 min.

Scanning electron microscopy, SEM was used to evaluate the structure of the nickel phosphide formed using the gas transport method disclosed above.

Figure 3 discloses a SEM image of a Ni foam prior to application of the gas-transport method and may be used for reference.

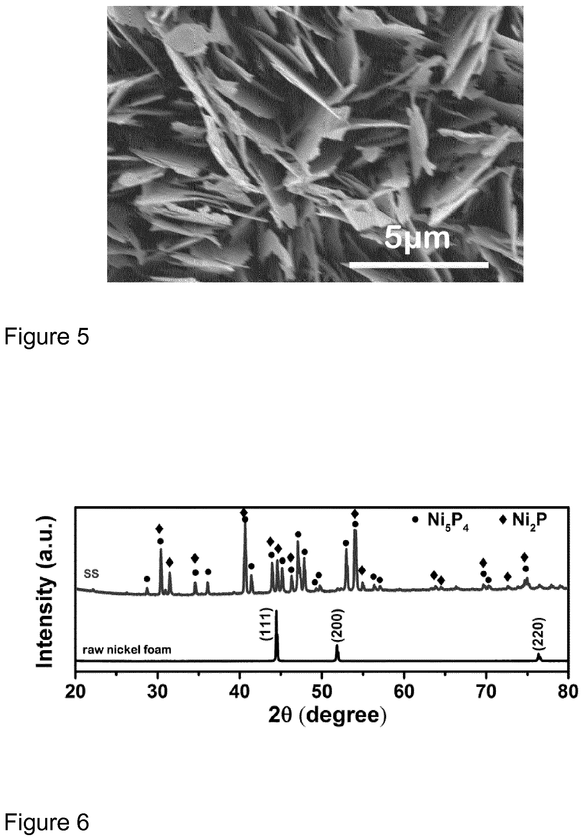

Figure 4 discloses a SEM image of a Ni foam illustrating that the porous structure after using the gas transport method performed at 500 °C for 6 h as discussed above. Upon inspection of the Ni foam surface it may be deduced that the macroporous morphology of the initial porous Ni foam remains essentially unchanged, i.e. the porous structure of the Ni foam is maintained. The scanning electron image of figure 4 reveals, however, that a microstructure is formed on the surface of the Ni foam. Figure 5 discloses a high magnification SEM image revealing the surface microstructure formed by the gas transport method. The SEM image illustrates that densely-packed nanosheets are formed on the surface of the Ni foam. For these conditions nanosheets having thicknesses ranging from several tens to one hundred nanometers are formed.

Scanning electron microscopy (SEM) examination on samples where the phosphorization was also carried out at other temperatures ranging from 400°C, to 800°C while keeping other parameters unchanged,reveals that the sheet-like morphology only appears for phosphorization at temperatures ranging between 400 and 500 °C

To determine the composition of the nanostructured features, i.e. of the the nanosheets, energy dispersive X-ray (EDX) spectrum on the nanosheets were performed and verify that the nanosheets consist of Ni and P as no peaks from other elements were detected. Figure 6 shows an X-ray diffraction (XRD) pattern revealing the phase constitutes of the nickel phosphide formed by the gas transport method, taking raw nickel foam as a reference. Quantitative analysis of XRD patterns (not shown) of the nickel phosphide nanosheets show that the sample is composed of a mixture of hexagonal Ni₅P₄ (ICDD no. 04-014-7901) and Ni₂P (ICDD no. 04-003-1863), where Ni₅P₄ is the major component accounting for ca. 80 wt%. Notably, the intensity of the diffraction peaks from metallic Ni becomes fairly weak after phosphorization, indicating an almost complete conversion of Ni to nickel phosphide as a result of the gas-transport method according to this embodiment. Moreover, SEM-EDX mapping shows that Ni and P are uniformly distributed over the surface of the Ni foam.

To evaluate hydrogen evolution reaction (HER) performance, self-supported Ni-P electrodes obtained after gas-transport synthesis at 500 °C for 6 h was exposed to N₂-saturated 0.5 M H₂SO₄ aqueous solution as the working electrode.

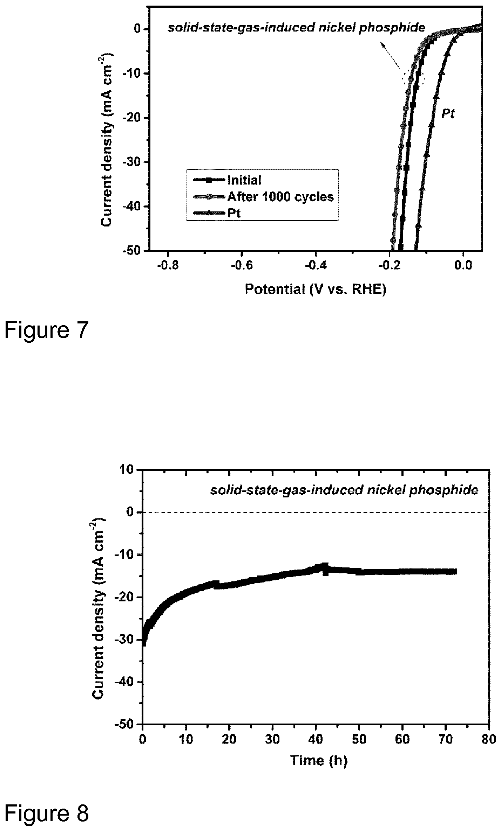

Figure 7 shows the polarization curve for this self-supported nanostructured nickel phosphide (Ni₅P₄-Ni₂P nanosheet) electrode in 0.5 M H₂SO₄ with a scan rate of 10 mV s⁻¹. A bare Pt plate were also examined for comparison. An IR correction was made in the given LSV data to reflect the intrinsic behaviour of catalysts. The self-supported nickel phosphide electrode exhibits significantly improved cathodic current, revealing its greatly enhanced electrocatalytic activity toward HER. Although Pt depicts expected HER performance with near-zero overpotential, the directly architected nickel phosphide electrode also functions as an efficient HER cathode with a small onset overpotential of -54 mV and further negative potential leads to a rapid rise of hydrogen evolution cathodic current. Furthermore, this self-supported nickel phosphide electrode affords current densities of 10, 20 and 100 mA cm⁻² at overpotentials of -120, -140, and -200 mV, respectively. These overpotentials compare favourably to the behaviour of most previously reported non-precious HER catalysts in acidic solutions including Mo- and W-based sulphide catalysts.

Hence, efficient nickel phosphide electrodes for HER were obtained by the gas transport method.

The phosphide electrodes obtained by the gas transport method are moreover stable and durable as may be shown by performing an accelerated degradation test (ADT). After performing the ADT for 1000 continuous cycles, it is clear that this electrode merely exhibited a slight current decay, with an overpotential increased by less than 18 and 21 mV to achieve current densities of 10 and 100 mA cm⁻², respectively. This nickel phosphide electrode was also tested at a constant potential of -200 mV vs. RHE more than 70 h, as shown in Figure 8. The catalytic electrode merely showed a slight decay in current as function of time, and finally reached to a stable state at ∼ 13 mA cm⁻². These results provide evidence that this self-supported nanostructured nickel phosphide catalytic electrode reveals an excellent catalytic activity and long-term durability for the HER.

According to another embodiment the manufacturing of a porous electrode material using the gas transport method comprises providing 0.1 g of amorphous red P as elemental phosphorus which is heated in a first reaction zone in a tube furnace at a vaporisation temperature T₁ of about 400°C. A porous structure consisting of about 0.6 g of Ni foam, corresponding to a Ni:P molar ratio of about 3:1, is further provided at a temperature T₂ of 500°C in a second reaction zone in the tube furnace. The first and second reaction zones are separated at a distance.

An Ar flow of 100 mL min⁻¹ may be used to feed the phosphorus vapour formed in the first reaction zone to the heated Ni foam in the second reaction zone. Hence the phosphorous vapour is brought in contact with the Ni foam such that nickel phosphide may be formed.

According to yet another embodiment the Ni:P molar ratio is about 1:1, i.e. 0.3 g of P red may be used in the previous embodiment.

It is realised that the porous transition metal phoshide electrodes provided according to embodiments provide efficient catalytic activity and long-term stability, and durability even in acidic medium.

The metal phosphide electrode may comprise Ni₅P₄-Ni₂P nanosheets which may be directly utilized as a cathode for electrocatalytic reactions.

### Example 4 - Evaluation of integrated Co-P electrode with the gas-transport method.

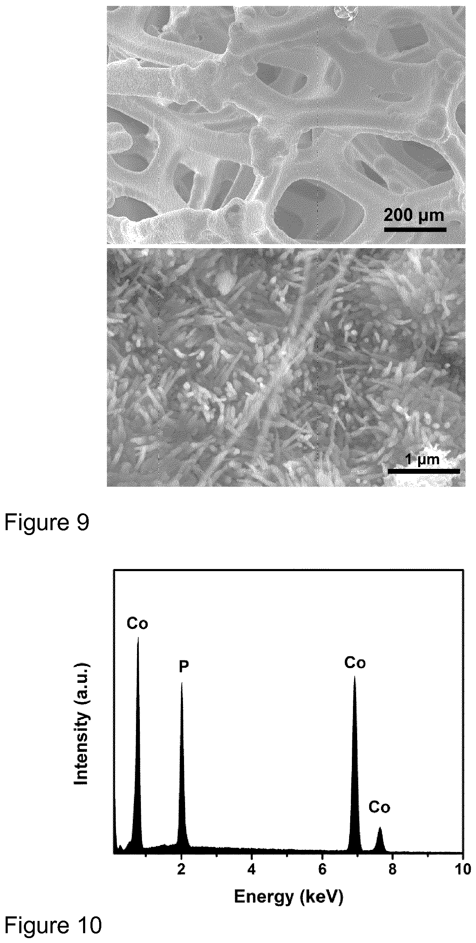

With reference to figures 9 to 12 cobalt, Co, phosphide electrodes manufactured with the gas-transport method have been evaluated and are discussed.

Figure 9 discloses low- and high-magnification SEM images of a Co foam illustrating that the porous structure after using the gas transport method performed at 500 °C for 3 h. The skilled person in the art, however, realizes that other temperature rages such as 400 - 800 °C may be used, such as a time duration of 0.5 - 24h. Upon inspection of the Co foam surface it may be deduced that the macroporous morphology is preserved, i.e. the porous structure of the Co foam is maintained, see the low-magnification SEM image in the upper portion of figure 9. Microscopically, the foam surface is covered with randomly oriented nanorods, see the high-magnification SEM image in the lower portion of Figure 9.

Figure 10 shows an energy dispersive X-ray (EDX) spectrum of the cobalt foam after phosphorization in red phosphorus vapour at 500 °C for 3h. The EDX spectrum verifies that the formed porous structure consists of Co and P as no peaks from other elements were detected.

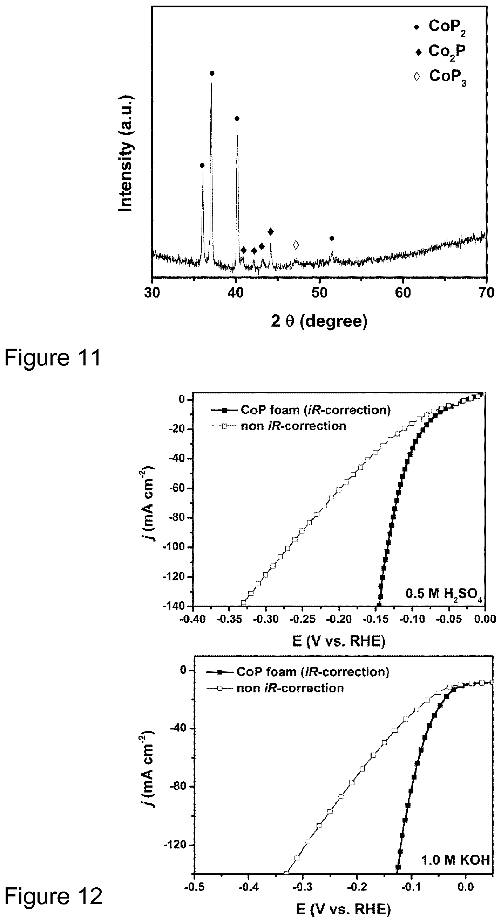

Figure 11 reveals an X-ray diffraction (XRD) pattern of a cobalt phosphide foam. Diffractions from CoP₂, Co₂P and CoP₃ were detected, verifying that the resulting porous cobalt phosphide foam has mixed crystal phases comprising CoP₂, Co₂P and CoP₃, with CoP₂ being the major phase.

To evaluate hydrogen evolution reaction (HER) performance, self-supported Co-P electrode obtained after gas-transport synthesis at 500 °C for 3 h was exposed to acidic and alkaline solutions. Figure 12 shows the electrocatalytic activity of the fabricated porous cobalt phosphide foam towards hydrogen evolution in both acidic and alkaline solution. In the upper diagram of figure 12 the polarization curve for a cobalt phosphide electrode exposed to N₂-saturated 0.5 M H₂SO₄ aqueous solution as the working electrode is shown. In the lower diagram of figure 11 a cobalt phosphide electrode exposed to 1.0 M KOH aqueous solution as the working electrode is shown. From the measurements it is clear that the directly architected cobalt phosphide electrode also functions as an efficient HER cathode with a small onset overpotential and where further negative potential leads to a rapid rise of hydrogen evolution cathodic current.

These results provide evidence that this self-supported nanostructured cobalt phosphide catalytic electrode reveals an excellent catalytic activity for the HER. Hence, efficient cobalt phosphide electrodes for HER were obtained by the gas transport method.

### Example 5 - Evaluation of integrated Cu-P electrode with the gas-transport method.

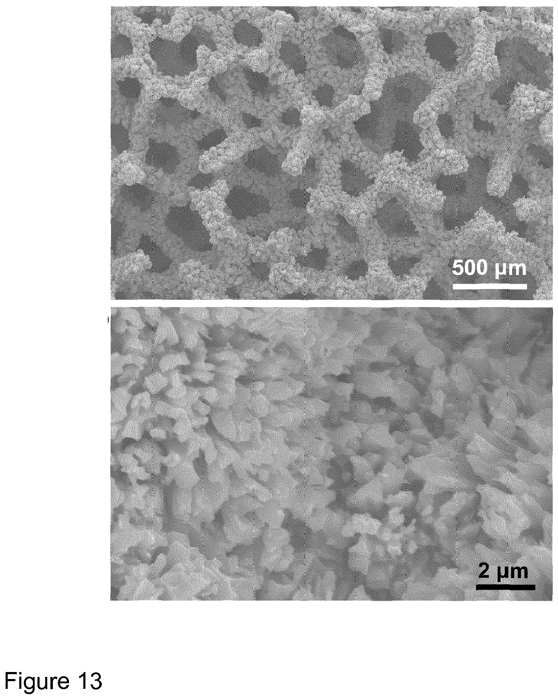

With reference to figures 13 to 15 copper, Cu, phosphide electrodes manufactured with the gas-transport method have been evaluated and are discussed.

Figure 13 discloses low- and high-resolution SEM images of a Cu foam illustrating that the porous structure after using the gas transport method performed at 500 °C for 6 h. The skilled person, in the art, however, realizes that other temperature rages such as 400 - 800 °C may be used for example 0.5 - 24h. Upon inspection of the Cu foam it may be deduced that the macroporous morphology is preserved, i.e. the porous structure of the Cu foam is maintained, see the low-magnification SEM image in upper portion of Figure 13. Microscopically, the foam surface is covered with a high density of short nanorods, see the high-magnification SEM image lower portion of Figure 13.

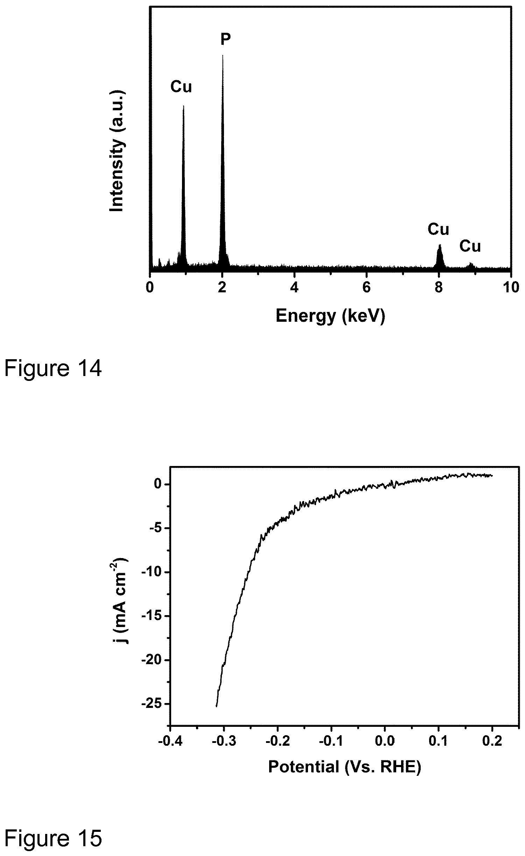

Figure 14 shows an energy dispersive X-ray (EDX) spectrum of the copper foam after phosphorization in red phosphorous vapour at 500 °C for 6 h. The EDX spectrum verifies that the formed porous structure consists of Cu and P as no peaks from other elements were detected. Hence, an efficient manufacturing of copper phosphide electrodes was also obtained by the gas transport method.

To evaluate hydrogen evolution reaction (HER) performance, self-supported Cu-P electrode obtained after gas-transport synthesis at 500 °C for 6 h was exposed to 0.5 M H₂SO₄. Figure 15 shows the electrocatalytic activity of the fabricated porous copper phosphide foam towards hydrogen evolution in 0.5M H₂SO₄. From the measurement it is clear that the directly architected copper phosphide electrode also functions as an efficient HER cathode with a small onset HER overpotential of 84 mV and where further negative potential leads to a rapid rise of hydrogen evolution cathodic current.

In the above experiments the transition metals Ni, Co, and Cu have been exemplified. The skilled person in the art, however, realizes that other transition metals such as Sc, Ti, V, Cr, Mn, Fe, or Zn may be used when providing a porous electrode material comprising transition metal phosphide on a porous structure comprising transition metal.

To this end, the transition metal may be selected from the group of transition metals of the periodic table.

The wording transition metal shall be understood as an element whose atom has a partially filled d sub-shell, or which can give rise to cations with an incomplete d sub-shell. The transition metals therefore comprise any element in the d-block, i.e. atoms of the elements having between 1 and 10 *d* electrons, of the periodic table, which includes groups 3 to 12 on the periodic table. The f-block lanthanide and actinide series are, however, also to be understood as transition metals also referred to as inner transition metals.

It is further realised that, for example, experimental parameters, materials or compounds referred to or used with reference to an example with the solid state method may be relevant also with regard to the gas transport method, and vice versa.

The person skilled in the art further realizes that the present invention by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. Method for manufacturing of a porous electrode material, wherein the porous electrode material comprises transition metal phosphide on a porous structure comprising transition metal, the method comprising:
providing elemental phosphorus separated from the porous structure comprising transition metal,
evaporating elemental phosphorus by heating, thereby forming a phosphorus vapour,
contacting the phosphorus vapour and the porous structure comprising transition metal, and
heating, in an inert atmosphere, the contacted elemental phosphorus and the porous structure comprising transition metal to a temperature in the temperature range of 300 to 1100°C, thereby reacting at least a part of the phosphorus and at least a part of the transition metal under formation of transition metal phosphide on the surface of the porous structure, thereby forming the porous electrode material.

2. The method according to claim 1, wherein the inert atmosphere is provided by an inert gas or by vacuum.

3. The method according to claim 1, wherein the evaporating is by heating to a temperature in the range of 300 to 800°C.

4. The method according to claim 1 or 3, wherein the contacting is by flowing the phosphorus vapour by a stream of inert gas such that the phosphorus vapour is brought in contact with the transition metal.

5. The method according to claim 1, wherein the inert atmosphere is provided by an inert gas, preferably Ar or N₂.

6. The method according to anyone of the previous claims, wherein
the transition metal is nickel, and
the transition metal phosphide is selected from the group consisting of Ni₃P, Ni₇P₃, Ni₅P₂, Ni_{2.55}P, NiP₃, NiP, Ni₈P₃, Ni₁₂P₅, Ni₅P₄, NiP₂, Ni₂P, and Ni₅P₄, or combinations thereof.

7. The method according to anyone of claims 1 to 5, wherein
the transition metal is cobalt and
the transition metal phosphide is selected from the group consisting of Co_{1.94}P, Co_{1.95}P, Co₂P, CoP, CoP₂, CoP₃, CoP₄ or combinations thereof.

8. The method according to anyone of claims 1 to 5, wherein
the transition metal is copper, and
the transition metal phosphide is selected from the group consisting of Cu₃P, CuP₂, Cu₂P₇, Cu_{0.97}P_{0.03}, Cu_{2.82}P, Cu_{0.985}P_{0.015}, Cu_{2.82}P, Cu_{2.872}P, CuP₁₀, or combinations thereof.

9. The method according to anyone of the previous claims, wherein the heating is heating to a temperature in the temperature range of 400 to 800°C.

10. The method according to anyone of the previous claims, wherein the heating takes place during 0.5 to 24 hours.

11. The method according to anyone of the previous claims, wherein the porous structure comprising transition metal, is provided in the form of a foam having a maximum average pore size of 1 mm or below, preferably 800 micrometers or below, more preferably 500 micrometers or below, most preferably 300 micrometers or below.

12. The method according to claim 11, wherein the metal foam has a porosity in the range of 25 and 99%, preferably 50 to 98%.

13. A porous electrode material obtainable from the method according to anyone of the previous claims.

## Patentansprüche

1. Verfahren zur Herstellung eines porösen Elektrodenmaterials, wobei das poröse Elektrodenmaterial Übergangsmetallphosphid auf einer porösen Struktur, die Übergangsmetall umfasst, umfasst, wobei das Verfahren umfasst:
Bereitstellen von elementarem Phosphor getrennt von der porösen Struktur, die Übergangsmetall umfasst,
Verdampfen von elementarem Phosphor durch Erwärmen und dadurch Ausbilden eines Phosphordampfes,
Inkontaktbringen des Phosphordampfes und der porösen Struktur, die Übergangsmetall umfasst, und
Erwärmen des elementaren Phosphors und der porösen Struktur, die Übergangsmetall umfasst, die in Kontakt gebracht wurden, in einer Inertatmosphäre auf eine Temperatur im Temperaturbereich von 300 bis 1100 °C und dadurch Umsetzen wenigstens eines Teils des Phosphors und wenigstens eines Teils des Übergangsmetalls unter Ausbildung von Übergangsmetallphosphid auf der Oberfläche der porösen Struktur und dadurch Ausbilden des porösen Elektrodenmaterials.

2. Verfahren nach Anspruch 1, wobei die Inertatmosphäre durch ein Inertgas oder durch Vakuum bereitgestellt wird.

3. Verfahren nach Anspruch 1, wobei das Verdampfen durch Erwärmen auf eine Temperatur im Bereich von 300 bis 800 °C erfolgt.

4. Verfahren nach Anspruch 1 oder 3, wobei das Inkontaktbringen durch Leiten des Phosphordampfes durch einen Inertgasstrom derart, dass der Phosphordampf mit dem Übergangsmetall in Kontakt gebracht wird, erfolgt.

5. Verfahren nach Anspruch 1, wobei die Inertatmosphäre durch ein Inertgas, vorzugsweise Ar oder N₂, bereitgestellt wird.

6. Verfahren nach einem der vorhergehenden Ansprüche, wobei
das Übergangsmetall Nickel ist und
das Übergangsmetallphosphid ausgewählt ist aus der Gruppe bestehend aus Ni₃P, Ni₇P₃, Ni₅P₂, Ni_{2,55}P, NiP₃, NiP, Ni₈P₃, Ni₁₂P₅, Ni₅P₄, NiP₂, Ni₂P und Ni₅P₄ oder Kombinationen derselben.

7. Verfahren nach einem der Ansprüche 1 bis 5, wobei
das Übergangsmetall Cobalt ist und
das Übergangsmetallphosphid ausgewählt ist aus der Gruppe bestehend aus Co_{1,94}P, Co_{1,95}P, Co₂P, CoP, CoP₂, CoP₃, CoP₄ oder Kombinationen derselben.

8. Verfahren nach einem der Ansprüche 1 bis 5, wobei
das Übergangsmetall Kupfer ist und
das Übergangsmetallphosphid ausgewählt ist aus der Gruppe bestehend aus Cu₃P, CuP₂, Cu₂P₇, Cu_{0,97}P_{0,03}, Cu_{2,82}P, Cu_{0,985}P_{0,015}, Cu_{2,82}P, Cu_{2,872}P, CuP₁₀ oder Kombinationen derselben.

9. Verfahren nach einem der vorhergehenden Ansprüche, wobei das Erwärmen ein Erwärmen auf eine Temperatur im Temperaturbereich von 400 bis 800 °C ist.

10. Verfahren nach einem der vorhergehenden Ansprüche, wobei das Erwärmen über 0,5 bis 24 Stunden stattfindet.

11. Verfahren nach einem der vorhergehenden Ansprüche, wobei die poröse Struktur, die Übergangsmetall umfasst, in Form eines Schaums bereitgestellt wird, der eine maximale durchschnittliche Porengröße von 1 mm oder darunter, vorzugsweise 800 Mikrometer oder darunter, insbesondere 500 Mikrometer oder darunter, ganz besonders bevorzugt 300 Mikrometer oder darunter, aufweist.

12. Verfahren nach Anspruch 11, wobei der Metallschaum eine Porosität im Bereich von 25 und 99 %, vorzugsweise 50 bis 98 %, aufweist.

13. Poröses Elektrodenmaterial, das mit dem Verfahren nach einem der vorhergehenden Ansprüche erhältlich ist.

## Revendications

1. Procédé destiné à la fabrication d'un matériau poreux d'électrode, dans lequel le matériau poreux d'électrode comprend un phosphure de métal de transition sur une structure poreuse comprenant un métal de transition, le procédé comprenant :
l'utilisation de phosphore élémentaire séparé de la structure poreuse comprenant un métal de transition,
l'évaporation du phosphore élémentaire par chauffage, formant ainsi une vapeur de phosphore,
la mise en contact de la vapeur de phosphore et de la structure poreuse comprenant le métal de transition, et
le chauffage, dans une atmosphère inerte, du phosphore élémentaire mis en contact et de la structure poreuse comprenant un métal de transition à une température dans la plage de températures comprise entre 300 et 1100 °C, faisant ainsi réagir au moins une partie du phosphore et au moins une partie du métal de transition lors de la formation du phosphure de métal de transition sur la surface de la structure poreuse, formant ainsi le matériau poreux d'électrode.

2. Procédé selon la revendication 1, dans lequel l'atmosphère inerte est obtenue au moyen d'un gaz inerte ou sous vide.

3. Procédé selon la revendication 1, dans lequel l'évaporation se fait par chauffage à une température dans la plage comprise entre 300 et 800 °C

4. Procédé selon l'une quelconque des revendications 1 à 3, dans lequel la mise en contact se fait par écoulement de la vapeur de phosphore au moyen d'un courant de gaz inerte de sorte que la vapeur de phosphore est mise en contact avec le métal de transition.

5. Procédé selon la revendication 1, dans lequel l'atmosphère inerte est obtenue au moyen d'un gaz inerte, de préférence Ar ou N₂.

6. Procédé selon l'une quelconque des revendications précédentes, dans lequel
le métal de transition est le nickel, et
le phosphure de métal de transition est choisi dans le groupe constitué de Ni₃P, Ni₇P₃, Ni₅P₂, Ni_{2,55}P, NiP₃, NiP, Ni₈P₃, Ni₁₂P₅, Ni₅P₄, NiP₂, Ni₂P et Ni₅P₄, ou des combinaisons de ceux-ci.

7. Procédé selon l'une quelconque des revendications 1 à 5, dans lequel
le métal de transition est le cobalt et
le phosphure de métal de transition est choisi dans le groupe constitué de Co_{1,94}P, Co_{1,95}P, Co₂P, CoP, CoP₂, CoP₃, CoP₄, ou des combinaisons de ceux-ci.

8. Procédé selon l'une quelconque des revendications 1 à 5, dans lequel
le métal de transition est le cuivre et
le phosphure de métal de transition est choisi dans le groupe constitué de Cu₃P, CuP₂, Cu₂P₇, Cu_{0,97}P_{0,03}, Cu_{2,82}P, Cu_{0.985}P_{0.015}, Cu_{2,82}P, Cu_{2,872}P, CuP₁₀, ou des combinaisons de ceux-ci.

9. Procédé selon l'une quelconque des revendications précédentes, dans lequel le chauffage est un chauffage à une température dans la plage de températures comprise entre 400 et 800 °C.

10. Procédé selon l'une quelconque des revendications précédentes, dans lequel le chauffage a lieu de 0,5 à 24 heures.

11. Procédé selon l'une quelconque des revendications précédentes, dans lequel la structure poreuse comprenant un métal de transition est utilisée sous la forme d'une mousse ayant une taille de pore moyenne maximale inférieure ou égale à 1 mm, de préférence inférieure ou égale à 800 µm, plus préférablement inférieure ou égale à 500 µm, plus préférablement inférieure ou égale à 300 µm.

12. Procédé selon la revendication 11, dans lequel la mousse de métal possède une porosité dans la plage comprise entre 25 et 99 %, de préférence comprise entre 50 et 98 %.

13. Matériau poreux d'électrode pouvant être obtenu à partir du procédé conformément à l'une quelconque des revendications précédentes.
